# EUROPEAN PATENT SPECIFICATION

(11) **EP 2 480 696 B1**
(45) Date of publication and mention of the grant of the patent: **11.07.2018**
(21) Application number: 10795024.8
(22) Date of filing: 24.09.2010
(51) Int. Cl.: C22B 23/00

(54) **METHOD FOR RECOVERING NICKEL AND COBALT FROM LATERITE**
VERFAHREN ZUR RÜCKGEWINNUNG VON NICKEL UND KOBALT AUS LATERIT
PROCÉDÉ DE RÉCUPÉRATION DE NICKEL ET DE COBALT À PARTIR DE LATÉRITE

(30) Priority: 24.09.2009 FI 20095980
(43) Date of publication of application: 01.08.2012
(73) Proprietor: NORILSK NICKEL HARJAVALTA OY, 29200 Harjavalta (FI); Promeca-Consulting Oy, 02320 Espoo (FI)
(72) Inventor: SNÅRE, Lars, FI-67100 Kokkola (FI); SAIKKONEN, Pekka, FI-00360 Helsinki (FI); RASTAS, Jussi, FI-02700 Kauniainen (FI)
(74) Representative: Berggren Oy, Helsinki & Oulu
(86) International application number: PCT/FI2010/050737
(87) International publication number: WO 2011/036345

(56) References cited:
- EP-A1- 1 790 739
- WO-A1-03/004709
- WO-A1-2006/029443
- WO-A1-2009/155634
- CA-A1- 2 521 817
- US-A- 4 097 575
- SENANAYAKE G ET AL: "A comparative study of leaching kinetics of limonitic laterite and synthetic iron oxides in sulfuric acid containing sulfur dioxide", HYDROMETALLURGY, ELSEVIER SCIENTIFIC PUBLISHING CY. AMSTERDAM, NL, vol. 72, no. 1-2, 1 February 2004 (2004-02-01), pages 59-72, XP004489275, ISSN: 0304-386X, DOI: 10.1016/S0304-386X(03)00132-4

## Description

### Field of invention

The invention relates to a method for recovering nickel and cobalt from laterites. In the method, laterite is hydrometallurgically treated in a two-step process.

### Background of invention

Commercially important nickel ores can be divided into two types, sulphide ones and oxide ones. About three fourths of terrestrial nickel deposits consist of oxide ores and one fourth of sulphide ores.

The oxide ores of nickel, which all contain a little cobalt, result from the chemical concentration of lateritic disintegration in ultrabasic rocks, mainly peridotite and serpentinite. When principally magnesium and silicon oxide are leached from the mother rock, the remaining top layer is enriched in nickel, cobalt, chromium, manganese, iron and aluminium (limonite layer). The layer below it is enriched in nickel, when minerals adsorb and precipitate it from a through-flowing solution (silicate laterites). The deposit profile separates three laterite ore types: limonite ore, transition ore (nontronite) and silicate ore (saprolite). Independent nickel mineral does not appear in silicate or limonite ores. In limonite, nickel is isomorphically incorporated into goethite ((Fe, Ni)OOH) and, in silicate minerals, as well isomorphically incorporated replacing magnesium (for example, garnierite (Ni, Mg)₆Si₄O₁₀(OH)₈). This results in that the ores are not generally enrichable and, in the metallurgic recovery of nickel, these nickel-bearing mineral phases have to be chemically decomposed. The end-product of the lateritic disintegration product is a highly ferrous disintegration deposit, limonite.

The composition of limonite ore is characterised by high iron content, over 40%, and low magnesium content, below 5%. When comparing to silicate ores, the nickel content 0.8-1.5% is most often lower, whereas the cobalt and chromium contents are equivalently higher 0.1-0.2% and 1.4-3.4%. The ores are characterised by considerable water contents of 15-40% incorporated as hydrates and by a particularly fine grain size. The mineralogical structure of limonite is relatively homogenous. The dominant mineral is goethite (FeOOH) the fraction of which (often as incompletely crystallised) can be even over 90%. No single limit can be drawn for the higher silicate content of transition ore as, despite the high fraction of goethite, a great number of minerals appear, still at a lesser extent. Alongside with iron oxide minerals: goethite, hematite, maghemite and lepidocrocite, limonite ores may contain silicate minerals: serpentine, chlorite, talc, montmorillonite, enstatite, amphibole and kaolinite, as well as minerals: quartz, gibbsite, chrome spinel and manganese oxide. The nickel is principally in goethite and is additionally included in a small amount to silicates, chrome spinel, manganese oxides and maghemite, whereas cobalt is almost totally incorporated into manganese oxides and chromium is divided at a varying extent into goethite and chrome spinel.

Typical differences between limonite and silicate minerals also appear in their ways of processing. A hydrometallurgic method is applicable to the homogeneous limonite. Due to their original material, the heterogeneous silicates require flexible processes, as which pyrometallurgic methods have usually been employed so far.

Nowadays, nickel-containing oxide ores are processed in the following countries: Australia, Brazil, Cuba, Dominican Republic, Greece, Guatemala, the Philippines, New Caledonia, USA, Russia and former Yugoslavia.

A major part of nickel in the world was earlier produced mainly of sulphide ores. However, oxide ores are playing a more and more important role. In 1950, still over 90% of nickel in the whole world was produced of sulphide ores. Until 1980, this had already decreased to 65%. In 2003, 42% of nickel was produced of laterites. Until 2012, the share of laterites is estimated to increase to 51%.

Political, geographical, technical and economic factors have had an effect on the fact that nickel was earlier manufactured principally of sulphide ores. Most sulphide nickel ores exists in areas politically stable and close to the market. Their nickel fraction could be concentrated with relatively inexpensive physical methods, whereas this was not the case with oxide ores. Due to the homogenous division of nickel, sulphide materials can be processed from the start with chemical-metallurgic methods. The recovery of several by-products has also had an important economic aspect. These factors have favoured the processing of sulphide ores.

However, the beginning of the 1970's saw the utilisation of oxide nickel minerals starting to become competitive. There were two reasons: the gradually deteriorating quality of sulphide ores and the increasing labour costs particularly in underground mining. The result was that many companies established plants in various countries to treat oxide nickel minerals. Along with greatly increased investment costs, the rise in fuel prices restrained these intentions.

When producing nickel from oxide minerals, mostly of silicate ores, pyrometallurgic processes require twice or thrice the energy compared to the treatment of sulphide minerals. From this follows that these processes are highly dependent on the prices of energy sources.

Even though the current energy situation still favours the processing of sulphide minerals, producing nickel from such deposits is clearly limited for the following reasons: 1. known sulphide mineral sources are becoming exhausted, 2. their mining and concentration costs are continuously increasing as ore quality worsens, 3. there are tightening environmental protection measures particularly for sulphur, arsenic and metallic impurities. These problems and the fact that the resources of oxide minerals are overwhelming compared to sulphide ones are due to result in these considerably large deposits being utilised more and more.

As already mentioned above, oxide nickel ores consist of two types: limonite ores which form the upper layer of laterite deposits and silicate ores of the lower layers. The typical chemical compositions of limonite and saprolite are approximately in the following ranges: limonite: 0.6-1.8% Ni, 0.1-0.2% Co, 1-4% Mg, 35-50% Fe; saprolite: 1.2-3.5% Ni, 0.02-0.1% Co, 10-30% Mg, 10-20% Fe. Ore deposits usually consist of both ore types. Conventionally, it is still possible with selective separation methods and screening to separate the ferrous limonite fraction and the fraction enriched in nickel-magnesium silicates. This is particularly important because both mineral types behave in a very different way in metallurgic methods. The limonite ore type is currently processed with hydrometallurgic methods, but the silicate ore type with pyrometallurgic methods, which are not examined here in detail as they are far from the scope of the method described.

The further processing of limonite nickel ore has occurred hydrometallurgically either after thermal prereduction with ammoniaalkali leaching (Caron process) or immediately with sulphuric acid in an autoclave under high pressure (HPAL process). The sulphuric acid-pressure leaching yields better nickel and cobalt recoveries and spares from the drying of watery ore.

In the Caron process, the ore is a mixture of limonite and silicate-type with ratio 2:1 containing about 1.4% Ni, 0.1% Co, 38% Fe, 1.5% Cr₂O₃, 8% MgO and 14% SiO₂. The mineral is dried from the moisture content of 32% to about 6%, ground (90% < 74 µm) and reduced. The reduction potential is adjusted such that nickel is reduced substantially totally to metallic state (nickel-iron alloy) and Fe₂O₃ is reduced to Fe₃O₄, whereas the purpose is to keep the reduction of iron oxide to metallic or FeO to the minimum. The reduction temperature is about 760°C. Of the whole nickel quantity, approximately 83% enters ammonia-soluble metallic state. The reduced product is cooled and leached by using chemicals 7% NH₃ and 4% CO₂ and by blowing air in the solution. Nickel enters the solution as an ammine complex [Ni(NH₃)₂)]²⁺. Iron (II) is oxidised and precipitated as ferric hydroxide. Nickel is recovered as basic carbonate and ammonia and carbon dioxide are returned back to the process. The carbonate is thermally decomposed to nickel oxide (77% Ni). The recovery of nickel from mineral to oxide is about 76%. Part of the oxide is reduced with carbon to metallic state (88% Ni, 0.7% Co, 0.04% Ca, 0.3% Fe, 0.05% C and 0.05% Si).

In high-pressure leaching with sulphuric acid (HPAL), it would be advantageous due to the high moisture content (20-50% H₂O) of limonite mineral to avoid drying and to leach the ore directly for energetic reasons. Leaching with mineral acids (H₂SO₄, HCl and HNO₃) is still unselective, whereby there is a risk of leaching the whole ore. As an alternative, it is possible to select such temperature and pressure ranges in which nickel and cobalt salts are stable, but not the equivalent salt of iron. This is the basis for the first high-pressure leaching with sulphuric acid executed by Freeport Sulphur Co in Moa Bay, Cuba, and the combined pressure and atmospheric leaching by Amax.

According to studies, nickel is extracted from limonite ore only in such quantity as the nickel-bearing dominant mineral goethite and simultaneously iron are leached. As the leachability of sulphates after having gone through the maxim decreases as the temperature rises, the iron(III) and aluminium of the limonite are to be found in the temperature of over 200°C mainly from the residue, whereas nickel and cobalt are almost perfectly leached. The leaching limit of nickel is about 10 g/l but, due to the low content of nickel in the ore, this can only be achieved with very high slurry densities.

The leaching events of nickel, iron and aluminium as well as precipitations followed by leaching for the last two can be explained with the following reactions:
Iron:

   2FeOOH(s) + 6H⁺(aq) => 2Fe³⁺(aq) + 4H₂O (1)

   2Fe³⁺(aq) + SO₄²⁻(aq) + 3 H₂O => Fe₂O₃ · SO₃ · H₂O(s) + 4H⁺(aq) (2)

   Fe₂O₃ · SO₃ · H₂O(s) => Fe₂O₃ (s) + SO₄²⁻(aq) + 2H⁺(aq) (3)

   2FeOOH(s) => Fe₂O₃ (s) + H₂O (4)
Nickel:

   NiO(s) + H₂SO₄(aq) => NiSO₄(aq) + H₂O (5)
Aluminium:

   6AlO(OH)(s) + 18H⁺(aq) => 6Al³⁺(aq) + 12H₂O (6)

   6Al³⁺ (aq) + 4SO₄²⁻(aq) + 14H₂O => 3Al₂O₃ · 4SO₃ · 9H₂O(s) + 10H⁺(aq) (7)

   6Al³⁺(aq) + 6SO₄²⁻(aq) + 6H₂O => 3(Al₂O₃ · 2SO₃ · H₂O)(s) + 6H⁺(aq) (8)

After goethite has totally leached according to Reaction equation (1), along enter nickel and aluminium contained by goethite in accordance with Reaction equations (5) and (6). In the high temperature, always about 250°C, of high-pressure leaching and the residual acid content of below 40 g/l, the precipitated stable iron and aluminium compounds are hematite (Fe₂O₃) and alunite (3Al₂O₃ · 4SO₃ · 9H₂O) according to Reaction equations (4) and (7). The solid phase residue is thus substantially a precipitation product. Basic iron sulphate and aluminium sulphate containing more sulphur (Reaction equations (2) and (8)) are not to be expected in the conditions of high-pressure leaching. The iron and aluminium contents of the solution are determined as the functions of temperature and residual acid content. The principal consumer of acid is then aluminium. Silicate minerals contained by the ore are also leached, but quartz and chrome spinel are not leached and remain in the solid phase residue.

The AMAX process (also called the EPAL process) is a modification of the HPAL process and offers certain advantages compared to the latter. The most important of them is the possibility to treat along with limonite also MgO-bearing (saprolite) nickel ores. In the process, a fine fraction (H) with low magnesium and high iron content and coarse-structured material with high magnesium content (K) are separated from the ore by screening. The fine fraction with high limonite content (H) directly enters high-pressure leaching. The high-magnesium coarse fraction (K) is first ground and then conveyed to an atmospheric leaching step which the acid solution enters from the high-pressure leaching. In the atmospheric leaching step, about half of the soluble magnesium of the ore is dissolved and the major part of free acid is neutralised. The leach residue from the atmospheric leaching step is conveyed to the high-pressure leaching. The slurry coming from the high-pressure leaching is cooled, after which it enters countercurrent decantation. From there, the solid phase enters a waste area and the slurry is conveyed to the atmospheric leaching. The solution coming from the atmospheric leaching step enters an H₂S precipitation step in which nickel and cobalt are separated from the solution by precipitating them as sulphides, which precipitate enters further processing to separate nickel and cobalt. The solution coming from the sulphide precipitation is neutralised by roasted magnesium-rich mineral to the pH value of about 9. The solid phase of the neutralisation is conveyed to the atmospheric leaching step and the liquid phase to the countercurrent decantation.

The above general description of the prior art for laterites is primarily based on the following sources:
1. Queneau, P. E., Roorda, H. J., Nickel, Ullmanns Encyclopedia der Technischen Chemie, Band 17, 239-286 (1980),
2. Kerfoot, D. G. E, Nickel, Ullmann's Encyclopedia of Industrial Chemistry, Volume A17, 157-219(1991),
3. Schellmann, W., Verteilung, Bindung und chemische Mobilisierung des Nickels in eisenreichen lateritischen Nickelerzen, unveröffentl. Abschlussbericht Forschungsvorhaben Nr. 2964, Hannover 1976,
4. Kuxmann, U., Landau, M., Untersuchung zur Typisierung von nickel-, kobalt- und chromführenden limonitischen Lateriterzen bei der schwefelsauren Drucklaugung, Metall, 35. Jahrgang, Heft 5, Mai, 408-417 (1981),
5. Dalvi, A. D., Bacon, W. G., Osborne, R. C., The Past and the Future of Nickel Laterites, PDAC 2004 International Convention, Trade Show & Investors Exchange, March 7-10, 2004.

The first two are encyclopaedia articles discussing the subject of the article for about 50-60 pages. The articles also summarise the key literature on the field and they give a good general view on their article subjects and thus also laterites in that connection. The third is a report which experimentally studies the incorporation of particularly nickel into limonitic laterites. The study shows that nickel is isomorphically incorporated into goethite. The fourth is a thorough study which gives a clear picture on the consumption of sulphuric acid in the high-pressure leaching of limonitic laterites. The article is based on the dissertation of the latter author completed the same year. The fifth particularly describes the current situation in the processing of laterites and reviews projects under way and being planned.

With small additions, it can be concluded of the above that the limonitic laterite has been processed by hydrometallurgic methods, the HPAL and Caron processes, of which the former has gained priority. As stated above, the HPAL process was first implemented in Cuba (Moa Bay). The method has been followed up in Australia at the end of the 1990's at three plants (Murrin Murrin, Cawse, Bulong), several are under way (Reference 5). The AMAX process, or the EPAL process according to Reference 5, has as far as known been just implemented in Ravensthorpe after massive pilot tests.

In the hydrometallurgic processing of laterites, the balance has clearly tipped in the direction of autoclave processes. However, the autoclave is an expensive and high-maintenance reactor. Therefore, the attention has also turned to atmospheric hydrometallurgic processes, i.e., if it might provide a competitive arrangement. Recently, no such arrangements are in industrial use as far as known. However, work is done in several quarters to find new arrangements.

Patent Application Specification US2006/0002835 describes a process arrangement for leaching laterite ores containing limonites and saprolites in a two-step process. The first step comprises mixing and reacting the ore with concentrated mineral acid and the second step preparing a slurry of the acid/ore mixture in water and leaching the mixture to leach nickel and cobalt. Iron is efficiently separated from nickel and cobalt in the solid leach residue as an oxide or hydroxide of ferric iron other than jarosite.

In order to obtain a more detailed picture of the method described in the above specification, it will next be examined more closely.

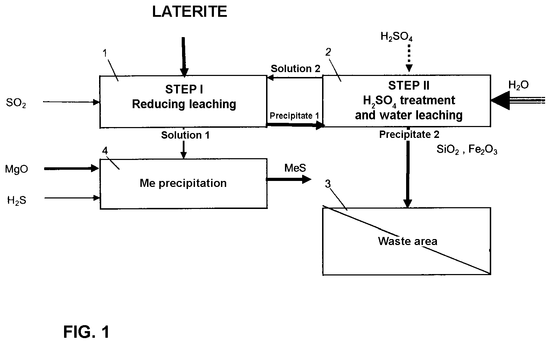

It is substantial in the method that it relates to a mixture of limonite and saprolite. The specification shows four schematic diagrams (Figs 1-4) for the process. The application of the method is depicted with four examples. In the first three, the dry-content ratio of limonite and saprolite was 1:1 and the quantity of mineral acid, which is sulphuric acid in all examples, 0.6 t / 1 t of dry ore. The ratios of acid and ore quantities are dimensioned such that, in the leaching step, which is simultaneously the precipitation range of ferric iron, the operation is in the precipitation range of goethite, even though not explicitly pointed out.

In the method, acid, the quantity of which is under-stoichiometric for the total leaching of laterites, is consumed for the partial leaching of laterites. In this step, the presence of saprolite is critical, because it, being more reactive than limonite, reacts with acid thus neutralising the solution. Then, the precipitation range of goethite is reached, on which the most part of the leaching and precipitation period (44-48 h) is spent. In these conditions, ferri in the solution is precipitated as goethite and the sulphates of ferric sulphate dissolve in the solution as sulphuric acid. The examples show that the ratio of sulphur and iron in the solid phase residue is so low (in Example 1 approximately 1:44) that no jarosite is found in it. X-ray diffraction analysis has also shown that hematite, goethite and spinel (derived from ore) appear in the solid phase residue.

Examples 1-3 employed the same laterites with the same mixture ratios (1:1) and the same ratio of acid and ore quantities (0.6 t / 1 t of dry ore). The first three examples were carried out in a similar fashion, except for that the drying time in the third example was only 1 h.

The performance in the fourth example differs somewhat from the ones of the first three. Laterites are different from the ones used in the first three, their analyses still differing relatively little. The ratio of (dry) saprolite and limonite quantities is now 1.1 and the ratio of acid and dry ore 0.65. Acid is totally fed to preheated (100°C) limonite and crushed saprolite is added to their mixture. Their mixture is mixed and ground using as the solution MgSO₄ solution ([Mg] = 30 g/l). The actual leaching (and precipitation) period was 24 h and temperature 95-100°C. After five hours of leaching, sulphur dioxide was added to reduce manganese (III, IV) phase to bivalent. At the completion of the leaching period, 20-% limestone slurry was added over about two hours to increase the pH of the solution to 3. Approximately 74% of iron in the solution was precipitated during neutralisation; net iron extraction after neutralisation was only about 2%. Approximately 2% of the nickel and 4% of the cobalt were co-precipitated in the neutralisation deposit. The leaching/precipitation period of the method is long, which is to be considered a disadvantage of the method when taking into account that the material quantities treated, due to the low nickel content of laterites, are very large.

Patent US 2 899 300 describes a method for recovering nickel from laterite ores. Laterite specified in and being the object of the patent and its example is of saprolite type. Laterite ore is sulphated with one or more sulphating operations by mixing the ore in a solution of sulphuric acid and by drying the slurry in the temperature range of 100-150°C until dry, after which it is crushed and pulverised. The quantity of sulphuric acid used in the sulphatising is no greater than about 80% of the quantity theoretically required to convert the metals of the ore to sulphates. The sulphated ore is then leached with water to acquire a liquid phase and a leach residue. The liquid phase is neutralised with magnesium oxide to pH between 3.5-4.2 to precipitate ferric iron as hydroxide. After removing the precipitate, the neutralisation of the liquid phase is continued with magnesium oxide to increase its pH value up to 8.2 to precipitate nickel and cobalt as hydroxides. After removing the nickel and cobalt precipitate, magnesium sulphate is recovered from the solution. The magnesium sulphate is decomposed to magnesium oxide and sulphur dioxide.

Patent US 3 793 432 describes the hydrometallurgic treatment of ores in the nickel group. Laterite being the object of the patent is of limonite type. In the method described in the patent, laterite is leached in a solution containing sulphuric acid in the temperature range of 70-100°C (temperature in the examples is about 90°C) by adjusting the pH of the solution to a value below 1.5 and advantageously below about 0.7. The retention of ferric iron in the solution is prevented by adding alkali and ammonium compounds soluble in slurries which provide the solution with alkali and ammonium ions. Ferric iron is then precipitated as jarosites, which compound type being well known from the electrolytic zinc process the patent does not mention. The method employs high solids content in order to save reaction space. The reaction times are long, of the order of 100 h. With the method depicted in the patent, it is possible to acquire nickel and cobalt contained by laterites in reasonable quantities in the solution and ferric iron to precipitate sufficiently far in order to separate nickel and cobalt from the tail liquor with known chemical separation methods.

Patent US 4 125 588 describes the hydrometallurgic processing of low-grade laterite ore. The process relates to dried laterite ore the analysis of which is: nickel 0.7%, cobalt 0.04%, chromium 0.5%, iron 6.5%, magnesium oxide 36%, silica 48% and calcination residue 6% i.e. highly saprolitic laterite. The process is divided in the following steps:
(a) dry-grinding dried ore;
(b) preparing a mixture of the ground ore and sulphuric acid (containing less than 10% of water);
(c) controlled adding of water in the acid/ore mixture to initiate an efficient sulphation reaction;
(d) utilising heat created in the sulphation reactions to enhance sulphation reactions, whereby water-soluble metal sulphates are formed;
(e) leaching the sulphated product with water to extract the water-soluble salts of iron, nickel and magnesium from the insoluble residue; and
(f) recovering the nickel, magnesium and iron from the liquid phase.

Patent US 4 410 498 describes a method "Acid leaching of nickel from serpentinic laterite ores". In the method, laterite ore is classified based on grain size to acquire fine limonitic fraction and coarse serpentinic (saprolitic) fraction. The former fraction enters the autoclave for high-pressure sulphuric acid leaching (HPAL step) and the latter fraction, after grinding, atmospheric leaching. The slurry exiting the high-pressure leaching is conveyed to the atmospheric leaching in which, in the leaching step, is also fed reducing gas for adjusting the redox potential of the solution between 200-400 mV measured against saturated calomel electrode. The slurry coming from the atmospheric leaching step enters liquid phase-solid phase separation. The washed solid phase is waste, and the liquid phase enters metal separation. The method is an EPAL-type process.

Patent US 6 379 637 describes an arrangement "Direct atmospheric leaching of highly-serpentinized saprolitic nickel laterite ores with sulphuric acid". The arrangement consists of the following steps:
(a) pre-treating highly-serpentinised saprolite ore by crushing, screening and fine-grinding;
(b) pulping finely-ground highly-serpentinised saprolite ore with water to produce a pulped ore with a density of between 15-33% solids;
(c) heating the pulped ore;
(d) adding sulphuric acid to the heated pulped ore at atmospheric pressure in a quantity of at least 80% by weight of the finely-ground highly-serpentinised saprolite ore on a dry weight basis, and whereby the heat released mixing said sulphuric acid with the pulped ore raises the temperature of the mixture to a reaction temperature of at least 80°C;
(e) agitating the mixture for an effective period of time, whereby metal oxides are leached from the heated pulp ore mixed with sulphuric acid to produce a hot leach pulp;
(f) adding a first basic neutralising agent in the hot leach pulp to precipitate ferric iron present in its liquid phase thus producing a partially neutralised hot leach pulp;
(g) separating partially neutralised leach pulp into liquids and solids, whereby the liquid phase contains sulphates of the metals; and
(h) recovering an intermediate product containing nickel and cobalt from the liquid.

The first neutralising agent utilised to precipitate iron is limestone. In this precipitation step, the pH of the liquid phase is increased to a value of about 4. An intermediate product of nickel and cobalt is separated using as reagents hydrogen sulphide and/or as neutralising agents magnesium oxide or alkaline compounds of sodium. Depending on the way of precipitation, the intermediate product is either sulphide or hydroxide. The actual leaching period in suitably chosen conditions is only about 1 h. The recoveries of nickel and cobalt are good, clearly over 90%.

Patent Publication CA 2 521 817 describes an atmospheric leaching process for recovering nickel and cobalt from laterite ore which includes a low-magnesium ore fraction (limonite) and a high-magnesium ore fraction (saprolite). The process is divided in the following steps:
(a) forming an aqueous pulp of the above laterite,
(b) leaching the above aqueous pulp with a concentrated mineral acid at atmospheric pressure to produce a slurry containing a leach liquor and a leach residue,
(c) treating the leach liquor either separately or as part of the above slurry to recover leached nickel and cobalt, leaving a magnesium-containing solution,
(d) treating the above magnesium-containing solution to recover a magnesium-containing salt from it.

The solids content of the aqueous pulp formed in step (a) is 20% or higher. The ratio between acid and dry laterite is approximately between 0.5-1.0, such as 0.5-0.7. The leaching temperature is at least 60°C, advantageously at least 75°C, increasing to the temperature of 95°C in the most advantageous cases. Ore fractions can be leached either simultaneously or in successive steps, the limonite at the first and the saprolite at the second step. The leaching period can vary between 2-30 h. Mineral acid used in the leachings is usually sulphuric acid. The quantity of sulphuric acid is 100-140% of the stoichiometric quantity which is approximately equivalent to 90% of the quantities of nickel, cobalt, iron and manganese and over 80% of the one of aluminium and magnesium in the ore. The ratio between low- and high-magnesium ore is between 0.5-1.3, advantageously between 1.0-1.3.

Adding saprolite can cause the precipitation of iron. Temperature, time and acid concentration control the precipitation of iron and aluminium. Acid concentration can be controlled by adding saprolite, magnesium oxide, magnesium hydroxide, magnesium carbonate or other neutralising agents. It is also possible to add compounds which produce sodium, potassium or ammonium ions in the slurry, whereby jarosites are precipitated. It is advantageous to add magnesium oxide and adjust the pH of the solution to the value 3.0 or higher, whereby iron(III) is precipitated.

Nickel and cobalt can be separated either by hydroxide or sulphide precipitation. It is also possible to employ separation methods based on ion exchange or liquid-liquid extraction.

When nickel, cobalt, iron, aluminium and manganese have been separated, the solution principally contains dissolved magnesium. When using sulphuric acid, the dissolved magnesium salt is magnesium sulphate which is separated from the liquid phase. The magnesium sulphate salt can be calcinated to acquire magnesium oxide and sulphur dioxide which can be used to produce sulphuric acid.

Publication WO 03/004709 describes a method in which laterite ore is fine-ground in an attritor mill into a particle size < 10 µm for changing the structure of mineral particles. The ground ore is leached e.g. with sulphuric acid, hydrochloric acid or a mixture of sulphuric acid and sulphur dioxide. The examples employ dilute sulphuric acid as the leach liquid. The leaching can be a multi-step countercurrent or co-current process and can be performed at atmospheric pressure in 90-95°C or at a pressure between 8-60 atm in the temperature of 150-270°C. The actual invention of the method is combining fine-grinding (into particle size < 10 µm) with leaching. Decreasing particle size accelerates leaching in a known manner. The leaching speed of limonitic laterite in a solution containing sulphuric acid is described, inter alia, in an article by Senanayke, G. and Das, G.K. (2004), "A comparative study of leaching kinetics of limonitic laterite and synthetic iron oxides in sulfuric acid containing sulfur dioxide", Hydrometallurgy 72, 59-72, and in several of its quoted references. Example 2 depicts the leaching of a laterite sample of 10 g in a solution 400 ml H₂SO₄ (100 g/l) in the temperature of 80°C. When considering that 10 g of limonitic laterite leached far consumes sulphuric acid of the order of about 10 g, the example gives information on the leaching speed of limonitic laterite in a solution of sulphuric acid in the concentration of H₂SO₄ 90-100 g/l in the temperature of 80°C. Essential to the process is the total consumption of sulphuric acid which consists of the quantity of sulphuric acid consumed in the leaching of the laterite and the quantity of sulphuric acid remaining in the tail liquor after the leaching. However, examples yield no information on this.

### Purpose of invention

A very considerable part of the hydrometallurgic processing of laterites has focused on limonitic laterites. In this processing, the autoclave process, the HPAL method, has become central. The autoclave is in any event an expensive and high-maintenance device. When further considering that the nickel content of limonitic laterites is relatively low, usually of the order of 1-1.5%, whereby annual laterite quantities treated are great, often of the order of 4-5 million tons per year, this sets considerable requirements particularly for the use of autoclaves and their service and maintenance.

The feed material containing along with limonite also saprolite, the consumption of sulphuric acid increases in relation to the feed of ore, whereby the usability of the autoclave process clearly diminishes. In such a case, it is possible to use a combined autoclave and atmospheric leaching process, the EPAL process, but, also in this case, the key apparatuses of the process are autoclaves with their additional devices, whereby the above disadvantages still exist.

Usually, no sulphuric acid factory is constructed into connection with plants which hydrometallurgically process laterites, whereby the sulphuric acid required by the processes must be purchased from external sources. As the availability of sulphuric acid becomes difficult, the production of the plants is disturbed and difficulties arise.

Plants hydrometallurgically processing laterite pertain, when operating in the current operation modes, a considerable disadvantage which has been addressed only a little, namely great amounts of waste created in the processes, which also results in large waste areas. The processes recover from the laterites nickel and cobalt as an intermediate product, either as sulphide or hydroxide precipitate, which enters further processing for separating nickel and cobalt. The other part of laterites, the fraction remaining solid phase in the process and, of the fraction having entered the solution, hydroxide and plaster precipitate usually precipitated by limestone and lime, form together a great amount of waste entering the waste area.

Furthermore, the processes use a considerable volume of water the availability of which in certain areas is a problem on its own.

The purpose of the invention is to avoid above disadvantages.

### Summary of invention

The method according to the invention and some of its advantageous implementations are disclosed in the attached claims.

The invention relates to a method for recovering nickel and cobalt from laterite by means of sulphur dioxide and concentrated sulphuric acid.

The method according to present comprises includes first a two-step process in which sulphuric acid and sulphur dioxide, are used as reagents:
- feeding to the first process step laterite, a liquid phase acquired from the second process step, and sulphur dioxide;
- feeding to the second process step a residual solid phase acquired from the first step, and heated concentrated sulphuric acid with the concentration over 90%; and
- recovering nickel and cobalt from a solution acquired from the first step ;
wherein the quantity of sulphur dioxide fed in the process is dimensioned such that sulphur dioxide reduces all trivalent iron and cobalt and manganese assumed quadrivalent to bivalents and wherein said first and second process steps are processed in an atmospheric pressure.

The most relevant prior art to above mentioned method according to present invention has been presented in EP 1 790 739 or US 4 097 575.

US 4 097 575 discloses recovering nickel and cobalt from low magnesium oxidic ores by using high-magne-sium serpentine ores as a neutralizer. The core part of the process disclosed in D2 is to use autoclave and high pressure for treating laterite ore; one part of the laterite is fed to the acid kill leach step and another part of the laterite is fed to the acid pressure leach step. Neither use of SO₂ nor its use especially to the acid kill leach step is suggested in D2.

The general objectives of EP 1 790 739 is to recover metals from laterite using continuous heap leaching process which includes counter-current system with at least two stages. In the disclosed two-stage process, sulphuric acid is fed to the second stage. Addition of sulphur dioxide into the first stage is not in any way suggested in this is heap leaching process,

Thus, metals contained by laterite, such as iron, nickel, cobalt, magnesium, manganese and aluminium, are sulphated far and a slurry consisting of sulphate liquid phase and insoluble solid phase is formed. The method includes a two-step countercurrent process, whereby at the first step is fed the whole laterite quantity and sulphur dioxide used in leaching and the sulphuric acid containing liquid phase coming from the second step, whereby sulphur dioxide reduces part of iron, manganese and cobalt originally contained by the laterite and trivalent iron coming from the second step with the solution to bivalent soluble sulphates. The process can be performed at atmospheric pressure, whereby no substantial over- or underpressure is thus used. The solid phase of the first step is treated at the second step by means of concentrated and most preferably hot sulphuric acid such that the metals contained by the solid phase are converted to sulphates. The soluble sulphates formed in the sulphuric acid treatment are leached to water. The residual solid phase is separated and removed from the process after washing. The liquid phase, in which the wash water can be combined, is conveyed to the first step. It is also possible to utilise the leach residue particularly when its silicate content is high.

The content of the concentrated sulphuric acid is in practice over 90%. It is best to use undiluted acid acquired from the manufacturing process of sulphuric acid. Its content is typically 94-96%.

In practice, the temperature at the second step of the process rises between 150-270°C and even over it. The quantity of heat required to reach the desired temperature mainly depends on the moisture of the solid phase being conveyed to the second step. The desired temperature is best reached by using hot concentrated sulphuric acid.

When the process steps are implemented at atmospheric pressure, no autoclaves are required. The needed apparatuses are simple also otherwise.

Compared to the process of specification WO 03/004709, the following advantages are provided: 1. The process requires no special fine-grinding. 2. The consumption of sulphuric acid is substantially smaller. 3. The reaction time is substantially shorter.

The solution coming from the first process step is conveyed to the separation of nickel and cobalt. The separation is best performed by precipitation, particularly coprecipitation. For instance, selective coprecipitation is applicable. The acquired precipitate is then conveyed to further processing.

The liquid phase, from which nickel and cobalt have been separated, can be concentrated. The acquired water can be returned to the process to a suitable step. The salt phase can be decomposed thermally, whereby the acquired sulphur dioxide can be used in the manufacture of sulphuric acid.

According to an alternative, magnesium sulphate is separated from the solution from which iron has been precipitated. The magnesium sulphate can be conveyed to thermal decomposing, the sulphur dioxide formed in which can be conveyed to the manufacture of sulphuric acid. Magnesium oxide formed in the thermal decomposition can be utilised as a neutralising agent in the precipitation of metals.

According to another alternative, iron and magnesium are separated together as sulphates from the solution from which nickel and cobalt have been precipitated. The iron and magnesium sulphates can be conveyed to thermal decomposing the conditions of which are adjusted such that magnesium remains in the sulphate form, but iron sulphate decomposes to hematite. Sulphur dioxide is created in the decomposition. It can be used at the first leaching step and utilised for manufacturing sulphuric acid used at the second step.

### List of figures

Fig. 1 shows a schematic diagram which describes a two-step treatment included in the processing of laterites,
Fig. 2 shows a schematic diagram of a method according to the invention and
Fig. 3 shows a schematic diagram of another method according to the invention.

### Detailed description of some embodiments of the invention

In the following, some embodiments of the invention are described in more detail.

In limonitic laterite, nickel is isomorphically incorporated into goethite (Fe,Ni)OOH and, in saprolitic laterite, isomorphically into magnesium silicates replacing magnesium (for example, garnierite (Mg,Ni)₆Si₄O₁₀(OH)₈).

In the processing of laterites, we have considered these isomorphisms. In order to reach the nickel contained by isomorphic compounds, the isomorphic compounds have to be decomposed or decomposed and formed into new compounds which do not include nickel in their lattice. The fact that cobalt is almost totally incorporated into oxidised manganese minerals (Mn(III) and/or Mn(IV) oxides and hydroxides) is also considered.

The starting point of the arrangement described by the invention is that laterites are processable in a two-step atmospheric process (to acquire nickel and cobalt to liquid phase) by using sulphur dioxide and concentrated sulphuric acid as reagents as well as water added at a suitable step. The quantity of sulphur dioxide fed in the process is to be dimensioned such that sulphur dioxide reduces all trivalent iron and cobalt and manganese assumed quadrivalent to bivalents (Reactions (9) ... (11)). The process is supplemented with Reactions (12) ... (17) which utilise concentrated sulphuric acid to acquire components Fe(OH)₂, Co(OH)₂, NiO, Al₂O₃, MgO and M₂O (M = Na, K) to the sulphate form, and which reactions reveal the sulphuric acid consumption required by the process.

It has been assumed in the calculations that Mn and Co are in the form MnO₂ and CoOOH. A major part of SO₂ is consumed by FeOOH, the fraction of MnO₂ is smallish and the fraction of CoOOH is insignificant.

2FeOOH + SO₂ => FeSO₄ + Fe(OH)₂ (9)

MnO₂ + SO₂ => MnSO₄ (10)

2CoOOH + SO₂ => CoSO₄ + Co(OH)₂ (11)

H₂SO₄ consumption considers Reactions (12) ... (17).

Fe(OH)₂ + H₂SO₄ => FeSO₄ + 2H₂O (12)

Co(OH)₂ + H₂SO₄ => CoSO₄ + 2H₂O (13)

NiO + H₂SO₄ => NiSO₄ + H₂O (14)

Al₂O₃ + 3H₂SO₄ => Al₂(SO₄)₃ + 3H₂O (15)

MgO + H₂SO₄=> MgSO₄ + H₂O (16)

M₂O + H₂SO₄ => M₂SO₄ + H₂O (M = Na, K) (17)

SO₂ and H₂SO₄ consumptions of laterite example kmol and kg per t of dry laterite:

| | | | | | | | **SO₂** | | **H₂SO₄** | |
|---|---|---|---|---|---|---|---|---|---|---|
| | % | kg/t | kmol/t | Compound | kmol/t | kg/t | kmol/t | kg/t | kmol/t | kg/t |
| Ni | 1.49 | 14.9 | 0.254 | NiO | 0.254 | 18.96 | | | 0.254 | |
| Co | 0.15 | 1.5 | 0.025 | CoOOH | 0.025 | 2.34 | 0.013 | | 0.013 | |
| Fe | 16.60 | 166.0 | 2.972 | FeOOH | 2.972 | 264.11 | 1.486 | | 1.486 | |
| Al | 2.20 | 22.0 | 0.815 | Al₂O₃ | 0.408 | 41.57 | | | 1.223 | |
| Mg | 3.90 | 39.0 | 1.604 | MgO | 1.604 | 64.67 | | | 1.604 | |
| Mn | 0.90 | 9.0 | 0.164 | MnO₂ | 0.164 | 14.41 | 0.164 | | | |
| Ca | 0.16 | 1.6 | 0.040 | CaO | 0.040 | 2.24 | | | | |
| Cr | 0.35 | 3.5 | 0.067 | Cr₂O₃ | 0.034 | 5.12 | | | | |
| Zn | 0.02 | 0.2 | 0.003 | ZnO | 0.003 | 0.25 | | | | |
| M | | | | M₂O | | | | | | |
| M= Na, K | | | | | | | | | | |
| ∑ | | | | | | | 1.663 | **106.5** | 4.580 | **449.2** |

Here when calculating the H₂SO₄ consumption, components CaO, Cr₂O₃, ZnO and M₂O(M = Na, K) are not considered.

For the laterite example was also performed a thermodynamic calculation. The calculation software was Outotec's HSC. The ratios of fed laterite and water quantities were: 250 kg laterite / 1,000 kg H₂O. The results show that, with theoretical SO₂ and H₂SO₄ quantities, the Ni, Co, Fe, Al, Mg and Mn components of laterite are practically totally in the sulphate form, i.e., the target is totally achievable based on initial assumptions.

Now, the initial assumption was that nickel is in a separate phase NiO. Previously, it has been clearly demonstrated that nickel is isomorphically incorporated into the lattices of goethite and magnesium silicate and these lattices have to be decomposed to reach the nickel. In the thermodynamic calculations, it was not possible to consider this isomorphism. It is still possible to engage nickel with oxygen and to use the component NiO when determining the consumption of sulphuric acid even in a case of isomorphism. However, it should be examined how it is possible, using the calculated SO₂ and H₂SO₄ quantities, to decompose the isomorphic compounds and to obtain both nickel and cobalt in the solution. This solution has to be searched experimentally.

The processing way is a two-step atmospheric process which is shown in Fig. 1. The schematic diagram of Fig. 1 only focuses on the start of the process. For clarity, this description includes phrases used in the figures. To the first step 1 are fed wet-ground laterite, the liquid phase (Solution 2) of the second step and sulphur dioxide required by the whole process. The sulphur dioxide reduces ferric sulphate contained by the liquid phase coming from the second step to ferrous sulphate, whereby sulphuric acid is released for two mol per one mol of ferric sulphate according to Reaction equation (18).

Fe₂(SO₄)₃ + SO₂ + 2H₂O => 2FeSO₄ + 2H₂SO₄ (18)

Manganese is in laterite for a major part as quadrivalent and cobalt for a considerable part as trivalent. Sulphur dioxide reduces them to bivalent, whereby they are already leached at the first step for a considerable part to the solution. The sulphur dioxide and sulphuric acid coming from the second step and created at the first step in Reaction (18) leach part of laterite at the first process step. The acquired slurry is concentrated and filtered.

The solid phase (Precipitate 1) acquired from the first step enters the second step which first includes an acid treatment. The quantity of sulphuric acid required by the whole process is fed to this treatment. In the acid treatment, metals in the solid phase (iron, magnesium, nickel, aluminium and those smallish quantities of manganese and cobalt which are still in the solid phase after the first step) react with heated concentrated sulphuric acid and are almost totally sulphated. The acid treatment can be performed e.g. in a drum or a so-called pug mill reactor. The treatment temperature is in the range of 150-270° C, whereby water contained by the solid phase substantially vaporises. The acid is fed to the reactor as preheated. If required, extra heat can be fed to the acid treatment step. For the solid phase of the second step (Precipitate 2) is performed water leaching to dissolve water-soluble sulphates of the phase. In most cases, the remainder is a solid phase mainly containing silicates which is separated and washed in a countercurrent precipitation system. The solids are removed from the process to a waste area 3 or, in certain cases, a practical use can be found for them. The solution circles from the second step back to the first step. Particularly when processing saprolite-bearing ore, the silicate content of Precipitate 2 can rise very high (easily over 90%), whereby it can be advantageous to utilise it.

The solution of the first step (Solution 1) first enters the separation of nickel and cobalt 4 (Me separation). The metals can be precipitated e.g. as sulphides with hydrogen sulphide and as the neutralising agent is used magnesium oxide which, as later will be described, is many times acquired as a product of the process. The sulphide precipitate is filtered and dried. It is a process product which goes forward to further processing to separate nickel and cobalt. The Me separation can also be performed with other methods, e.g. hydroxide precipitation, employing as the neutralising agent magnesium oxide acquired from the process. The solution continues in the process, whereby further processing is dependent on the ore being treated.

The following ore types are examined:
A. ore is limonite
B. ore is a mixture of limonite and saprolite
C. ore is saprolite

The start of the process is always as described above (Fig. 1).

### ABC

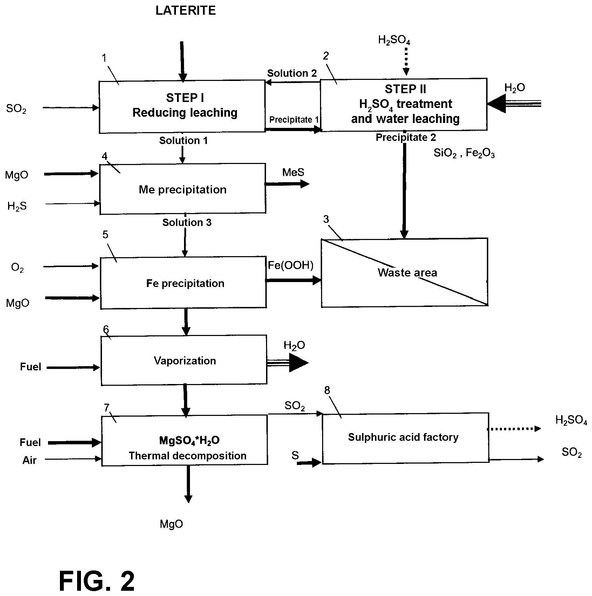

In all cases (A, B, C), it is possible to proceed in the further process according to the schematic diagram of Fig. 2. The two-step laterite process is first performed as shown in Diagram 1. (If the performance order of the start of the process i.e. the SO₂ treatment/sulphuric acid treatment is changed, the sulphuric acid consumption rises almost double according to our tests to reach Ni/Co leaching degrees equivalent to each other.) The solution after the sulphide precipitation of nickel and cobalt enters iron precipitation 5 in which, along with iron, aluminium and chromium being hydroxides in the solution and manganese as manganese oxide are precipitated.

2FeSO₄ + ½O₂ + 2MgO + H₂O => 2FeOOH + 2MgSO₄ (19)

Al₂(SO₄)₃ + 3MgO + 3H₂O => 2Al(OH)₃ + 3MgSO₄ (20)

Cr₂(SO₄)₃ + 3MgO + 3H₂O => 2Cr(OH)₃ + 3MgSO₄ (21)

MnSO₄ + ½O₂ + MgO => MnO₂ + MgSO₄ (22)

The created precipitate is separated, washed and removed from the process. The iron-poor liquid phase with its wash water enters the separation step, e.g. evaporative crystallisation 6, in which magnesium sulphate is crystallised as sulphate, advantageously as monosulphate. Energy required in the separation is provided by means of a suitable fuel. The condensed water is conveyed back to the process at a suitable point e.g. to step II. The crystallised magnesium salt enters thermal decomposing 7 in which it is thermally decomposed utilising e.g. carbon as the fuel. Sulphur dioxide created in the decomposing of magnesium sulphate is conveyed to a sulphuric acid factory 8 for manufacturing sulphuric acid and sulphur dioxide required in the process. Sulphur is also brought to the sulphuric acid factory to replace losses, advantageously as elemental sulphur.

MgSO₄· H₂O + ½C => MgO + SO₂ + ½CO₂ + H₂O (23)

The thermal decomposition of magnesium sulphate is described e.g. in patent specifications Cross, H. E., Anschütz, E., Reh, L., Hirsch, M., Verfahren zur Herstellung von Magnesiumoxid, DE2408308A1, 1965, and Anastasijevic, N., Hirsch, M., Methods and Apparatus for Heat Treatment in a Fluidised Bed, WO2004/056464A1, 2004.

Instead of the above, the thermal decomposition of magnesium sulphate can also be performed in oxidising conditions, which occurs in considerably higher temperatures than the reducing decomposition.

The solid phase is after washing (whereby possible sodium and potassium sulphates are dissolved of it) a completed product which is employed as a neutralising agent in the process for precipitating metals and the excess is a commercial product.

### A and B

In the cases of A (limonite) and B (mixture of limonite and saprolite), the process can be performed in accordance with the general processing way ABC described above (Fig. 2), but in both cases the precipitate formed in the precipitation of iron is washed, dried and possibly in the thermal process partially reduced. Then, the product is suitable for an iron concentrate or as raw material further processed for the manufacture of iron.

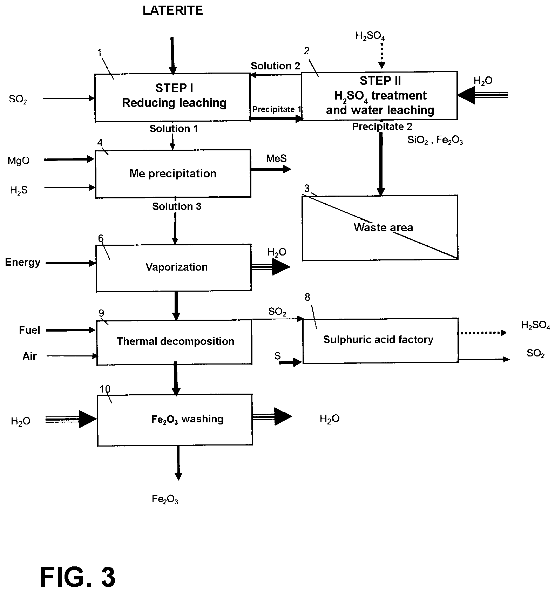

The schematic diagram of Fig. 3 shows an alternative in which laterite ore is mostly limonite. The two-step leaching of laterite is performed as shown in Diagram 1. The solution after the sulphide precipitation of nickel and cobalt is conveyed directly to the separation step 6, such as to evaporative crystallisation, without the iron separation step. The main component of the solution is then ferrous sulphate. The solution is concentrated advantageously by evaporating by leading there energy required for the concentration. The vaporised water is condensed and conveyed back to the process (not detailed in the figure). The vaporisation and salt crystallisation are controlled such that iron is crystallised as sulphate, advantageously as monohydrate (FeSO4· H₂O). The sulphates enter thermal decomposition 9. Its conditions are oxidising and the temperature is adjusted such that ferrous sulphate decomposes but magnesium sulphate remains sulphate:

MgSO₄· H₂O => MgSO₄ + H₂O (24)

2FeSO₄· H₂O => Fe₂O₃ + 2SO₂ + ½O₂ + 2H₂O (25)

Aluminium, chromium and manganese sulphates enter the oxide form in the thermal decomposition. The gas phase created in the thermal decomposition of iron sulphate and the above sulphates is conveyed to the sulphuric acid factory for manufacturing sulphuric acid and sulphur dioxide. The solid phase is washed with water to leach soluble components in washing 10. The washed solid phase mainly containing hematite Fe₂O₃ is dried. The hematite can be conveyed further to be used as an iron concentrate. The neutralisations required by the process are done with magnesium oxide. The solution formed in the washing of the solid phase includes the soluble salts of the solid phase (alkali and magnesium sulphates). The solution is treated employing known separation methods and utilising components suitably separated and formed in the treatment.

### C = ABC

For case C (saprolite), the most suitable arrangement is the general processing way ABC according to Fig. 2.

### Examples

### Example 1

### Step 1:

- 100 g of laterite (laterite example) (101.3 g of moist sample → H₂O: 1.35%)
- 300 ml of solution from step 2 (synthetic solution)

| | **g/l** | **Adjusted ICP/AAS g/l** |
|---|---|---|
| Co | 0.10 | 0.10 |
| Ni | 3.50 | 3.5 |
| Fe | 33.50 | 37.9 |
| Mn | 0.20 | 0.27 |
| Mg | 4.50 | 4.8 |
| Al | 3.50 | 3.7 |
| H₂SO₄ | 36.50 | 34.0 (titration to pH 1.4) |
| Fe²⁺ | 1.0 | |
| Fe³⁺ | 35.5 | |

- T: 90°C
- SO₂ : 30 ml/min (lid on container, water seal)
- magnetic stirring
- leaching time 2 h
- tail liquor 400 ml, pH 0.3
- wet precipitate to step 2: 141.2 g (dry precipitate: 85.2 g

| **Analyses** | **Tail liquor** | **Final precipitate** | |
|---|---|---|---|
| | **g/l** | **%** | |
| Co | 0.38 | 0.07 | |
| Ni | 3.9 | 1.2 | |
| Cu | 0.012 | 0.06 | |
| Fe | 40.0 | 12.7 | |
| Mn | 2.2 | 0.04 | |
| Mg | 5.8 | | |
| Zn | 0.008 | 0.01 | |
| Al | 3.7 | 1.7 | |
| Ca | 0.14 | 0.07 | |
| Cr | 0.14 | 0.37 | |
| pH | 0.3 | | |
| H₂SO₄ | 26.0 | | → titrated to pH value 1.4 |
| Fe²⁺ | 36.5 | | |
| Fe⁺³ | 3.5 | | |

### Step 2: sulphatising the precipitate of step 1 (H₂SO₄ treatment)

- 139.73 g of wet sample from step 1 (= 83.84 g of dry sample → H₂O 39.04%)
- obtained 1.467 g of wet sample for analysing
- 25 ml of heated concentrated H₂SO₄
- heating on hot plate for 60 min →
- 200 ml of H₂O to cooled precipitate
- magnetic stirring
- T: 90°C
- leaching time 60 min
- tail liquor 250 ml, pH 1.09
- final precipitate 58.1 g

| **Analyses** | **Tail liquor** | **Final precipitate** | |
|---|---|---|---|
| | **g/l** | **%** | |
| Co | 0.077 | 0.02 | |
| Ni | 3.7 | 0.05 | |
| Cu | 0.017 | <0.01 | |
| Fe | 41.0 | 4.2 | |
| Mn | 0.13 | <0.01 | |
| Mg | 5.5 | | |
| Zn | 0.035 | <0.01 | |
| Al | 5.3 | 0.13 | |
| Ca | 0.009 | 0.08 | |
| Cr | 1.1 | 0.08 | |
| pH | 1.09 | | |
| H₂SO₄ | 6.38 | | → titrated to pH value 1.4 |
| Fe²⁺ | 0.78 | | |
| Fe⁺³ | 40.22 | | |

### Example 1, calculations

### Step 1

### 300 ml of solution from step 2 (synthetic solution)

SO₂ 120 min * 30 ml/min = 3.6 l ⇔ 3.6/22.4 mol = 0.161 mol ⇔ 10.3 g

| | **Laterite** | | **Solution of step 2** | | **Tail liquor** | | **Leache d** | **Final precipitate of step 1** | | **Leached** |
|---|---|---|---|---|---|---|---|---|---|---|
| | 100 g | | 300 ml | | 400 ml | | | 85.2 g | | |
| | % | g | g/l | g | g/l | g | % | % | g | % |
| Ni | 1.49 | 1.49 | 3.5 | 1.05 | 3.9 | 1.56 | 34.2 | 1.20 | 1.02 | 31.4 |
| Co | 0.15 | 0.15 | 0.1 | 0.03 | 0.38 | 0.15 | 81.3 | 0.07 | 0.06 | 60.2 |
| Fe | 16.6 | 16.6 | 37.9 | 11.37 | 40.0 | 16 | 27.9 | 12.7 | 10.82 | 34.8 |
| Al | 2.2 | 2.2 | 3.7 | 1.11 | 3.7 | 1.48 | 16.8 | 1.7 | 1.45 | 34.2 |
| Mg | 3.9 | 3.9 | 4.8 | 1.44 | 5.8 | 2.32 | 22.6 | | | |
| Mn | 0.9 | 0.9 | 0.27 | 0.08 | 2.2 | 0.88 | 88.8 | 0.4 | 0.03 | 96.2 |
| pH | | | | | | 0.3 | | | | |
| H₂SO₄ | | | 34.0 | 10.2 | 26.0 | 10.4 | | | | |
| Fe²⁺ | | | 1.0 | 0.30 | 36.5 | 14.6 | | | | |
| Fe³⁺ | | | 36.5 | 10.65 | 3.5 | 1.4 | | | | |
| sample 1.467 g (wet) (141.2-1.467) g = 139.73 g => 84.31 (dry) | | | | | | | | | | |
| Fe₂(SO₄)₃ + SO₂ + 2H₂O => 2 FeSO₄ + 2H₂SO₄ | | | | | | | | | | |
| Fe 11.4 g 20.0 g H₂SO₄ | | | | | | | | | | |

### Step 2

H₂SO₄ 46 g, the final precipitate of step 1 as feed to step 2 => sulphuric acid treatment, the sulphuric acid treated precipitate is leached in water (200 ml)

| | **Precipitate of step 1 84.31 g** | | **Tail liquor 250 ml** | | **Leached** | **Final precipitate 58.1 g** | | **Leached** |
|---|---|---|---|---|---|---|---|---|
| | % | g | g/l | g | % | % | g | % |
| Ni | 1.20 | 1.01 | 3.7 | 0.93 | 91.4 | 0.05 | 0.03 | 97.1 |
| Co | 0.07 | 0.06 | 0.08 | 0.02 | 32.6 | 0.02 | 0.01 | 80.3 |
| Fe | 12.7 | 10.71 | 41.0 | 10.25 | 95.7 | 4.2 | 2.44 | 77.2 |
| Al | 1.7 | 1.43 | 5.3 | 1.33 | 92.4 | 0.13 | 0.08 | 94.7 |
| Mg | | | 5.5 | 1.38 | | | | |
| Mn | 0.04 | 0.03 | 0.13 | 0.03 | 96.4 | <0.01 | 0.006 | >82.8 |
| pH | | | 1.09 | | | | | |
| H₂SO₄ | | | 6.38 | 1.6 | | | | |
| Fe²⁺ | | | 0.78 | 0.2 | | | | |
| Fe³⁺ | | | 40.22 | 10.1 | | | | |

| Step 1 + step 2 | | leached % |
|---|---|---|
| Ni | | 98.1 |
| Co | | 92.3 |
| Fe | | 85.3 |
| Al | | 96.6 |
| Mg | | 57.8 |
| Mn | > | 99.4 |
| | | |
| H₂SO₄ | 0 + 46.0 | = 46.0 g |
| SO₂ | | = 10.3 g |

The processing way described in Example 1 is schematically shown in Fig. 1.

### Example 2

### Step 1:

- 100 g of laterite (laterite example) (101.3 g of moist sample → H₂O: 1.35%)
- 300 ml of solution from step 2 (synthetic solution)

| | **g/l** | **Adjusted ICP/AAS g/l** |
|---|---|---|
| Co | 0.10 | 0.11 |
| Ni | 3.50 | 3.61 |
| Fe | 43 | 38.7 |
| Mn | 0.20 | 0.27 |
| Mg | 4.50 | 4.7 |
| Al | 3.50 | 4.0 |
| H₂SO₄ | 20.0 | 21.6 (titration to pH value 1.4) |
| Fe²⁺ | 1.0 | |
| Fe³⁺ | 42 | |

- T: 90°C
- SO₂ : 35 ml/min (lid on container, water seal)
- magnetic stirring
- leaching time 2 h
- tail liquor 400 ml, pH 0.58
- wet precipitate to step 2: 164.3 g (dry precipitate: 84.8 g)

| **Analyses** | **Tail liquor** | **Final precipitate** | |
|---|---|---|---|
| | **g/l** | **%** | |
| Co (AAS) | 0.37 | 0.073 | |
| Ni (AAS) | 3.70 | 1.71 | |
| Cu | 0.01 | 0.02 | |
| Fe (AAS) | 34.9 | 16.8 | |
| Mn | 2.1 | 0.05 | |
| Mg | 5.5 | | |
| Zn | 0.005 | 0.01 | |
| Al | 3.6 | 1.54 | |
| Ca | 0.13 | 0.08 | |
| Cr | 0.104 | 0.4 | |
| pH | 0.58 | | |
| H₂SO₄ | 21.5 | | → titrated to pH value 1.4 |
| Fe²⁺ | 34.6 | | |
| Fe⁺³ | 0.3 | | |

### Step 2: sulphatising the precipitate of step 1 (H₂SO₄ treatment)

- 163.47 g of wet sample from step 1 (= 84.8 g of dry sample → H₂O 48.1 %)
- obtained 0.828 g of wet sample for analysing
- 30 ml of heated concentrated H₂SO₄
- heating on hot plate for 60 min →
- 200 ml of H₂O to cooled precipitate
- magnetic stirring
- T: 90°C
- leaching time 60 min
- tail liquor 300 ml, pH 0.67
- final precipitate 58.8 g

| **Analyses** | **Tail liquor** | **Final precipitate** | |
|---|---|---|---|
| | **g/l** | **%** | |
| Co (AAS) | 0.082 | 0.015 | |
| Ni (AAS) | 3.45 | 0.06 | |
| Cu | 0.016 | <0.01 | |
| Fe (AAS) | 38.7 | 3.8 | |
| Mn | 0.117 | <0.01 | |
| Mg | 5.12 | 0.11 | |
| Zn | 0.032 | <0.01 | |
| Al | 5.62 | 0.17 | |
| Ca | 0.009 | 0.07 | |
| Cr | 1.1 | 0.09 | |
| pH | 0.67 | | |
| H₂SO₄ | 16.1 | | → titrated to pH value 1.4 |
| Fe²⁺ | 1.95 | | |
| Fe⁺³ | | | |

### Example 2, calculations

### Step 1

### 300 ml of solution from step 2 (synthetic solution)

SO₂ 120 min * 35 ml/min = 4.2 l ⇔ 4.2/22.4 mol = 0.188 mol ⇔ 12.0 g

| | **Laterite** | | **Solution of step 2** | | **Tail liquor** | | | **Final precipitate of step 1** | | **Leached** |
|---|---|---|---|---|---|---|---|---|---|---|
| | 100 g | | 300 ml | | 400 ml | | Leached | 84.8 g | | |
| | % | g | g/l | g | g/l | g | % | % | g | % |
| Ni | 1.49 | 1.49 | 3.61 | 1.08 | 3.70 | 1.48 | 26.6 | 1.23 | 1.04 | 30.2 |
| Co | 0.15 | 0.15 | 0.11 | 0.033 | 0.37 | 0.148 | 76.7 | 0.042 | 0.0356 | 76.3 |
| Fe | 16.6 | 16.6 | 38.7 | 11.61 | 34.9 | 13.96 | 14.2 | 12.6 | 10.68 | 35.7 |
| Al | 2.2 | 2.2 | 4.0 | 1.2 | 3.6 | 1.44 | 10.9 | 1.54 | 1.31 | 40.6 |
| Mg | 3.9 | 3.9 | 4.7 | 1.41 | 5.5 | 2.2 | 20.3 | | | |
| Mn | 0.9 | 0.9 | 0.27 | 0.081 | 2.1 | 0.84 | 84.3 | 0.05 | 0.042 | 95.3 |
| pH | | | | | | 0.58 | | | | |
| H₂SO₄ | | | 21.6 | 6.48 | 21.5 | 8.6 | | | | |
| Fe²⁺ | | | 1.0 | 0.30 | 34.6 | 13.84 | | | | |
| Fe³⁺ | | | 42 | 12.6 | 0.3 | 0.12 | | | | |
| sample 0.828 g (wet) (164.3-0.828) g = 163.47 g => 84.37 (dry) | | | | | | | | | | |
| Fe₂(SO₄)₃ + SO₂ + 2H₂O => 2 FeSO₄ + 2 H₂SO₄ | | | | | | | | | | |
| Fe 11.6 g | | | | 20.4 g H₂SO₄ | | | | | | |

### Step 2

H₂SO₄ 55.2 g, the final precipitate of step 1 as feed to step 2 => sulphuric acid treatment, the sulphuric acid treated precipitate is leached in water (200 ml)

| | **Precipitate of step 1 84.37 g** | | **Tail liquor 250 ml** | | **Leached** | **Final precipitate 58.8 g** | | **Leached** |
|---|---|---|---|---|---|---|---|---|
| | % | g | g/l | g | % | % | g | % |
| Ni | 1.23 | 1.038 | 3.45 | 0.863 | 59.8 | 0.06 | 0.035 | 96.6 |
| Co | 0.042 | 0.0354 | 0.082 | 0.0205 | 33.3 | 0.015 | 0.0088 | 75.1 |
| Fe | 12.6 | 10.63 | 38.7 | 9.675 | 68.3 | 3.8 | 2.234 | 79.0 |
| Al | 1.54 | 1.299 | 5.62 | 1.405 | 98.0 | 0.17 | 0.100 | 92.3 |
| Mg | | | 5.12 | 1.28 | | 0.11 | 0.065 | |
| Mn | 0.05 | 0.0422 | 0.117 | 0.0293 | 69.3 | <0.01 | 0.0059 | >86.1 |
| pH | | | 0.67 | | | | | |
| H₂SO₄ | | | 16.1 | 4.03 | | | | |
| Fe²⁺ | | | 1.95 | 0.488 | | | | |
| Fe³⁺ | | | | | | | | |

| Step 1 + step 2 | leached | |
|---|---|---|
| Ni | | 97.6 |
| Co | | 94.1 |
| Fe | | 86.5 |
| Al | | 95.5 |
| Mg | | 98.3 |
| Mn | > | 99.3 |
| | | |
| H₂SO₄ | 0 + 55.2 = 55.2 g | |
| SO₂ | | = 12.0 g |

The processing way described in Example 2 is schematically shown in Fig. 1.

## Claims

1. A method for recovering nickel and cobalt from laterite, which method includes first a two-step process in which sulphuric acid and sulphur dioxide, are used as reagents, **characterised by**
- feeding to the first process step laterite, a liquid phase acquired from the second process step, and sulphur dioxide,
- feeding to the second process step a residual solid phase acquired from the first step, and heated concentrated sulphuric acid with the concentration over 90% and
- recovering nickel and cobalt from a solution acquired from the first step
wherein the quantity of sulphur dioxide fed in the process is dimensioned such that sulphur dioxide reduces all trivalent iron and cobalt and manganese assumed quadrivalent to bivalents and wherein said first and second process steps are processed in an atmospheric pressure.

2. A method according to claim 1, **characterised by** recovering from the solution acquired from the first step nickel and cobalt by precipitating, after which precipitating iron from the remaining solution.

3. A method according to claim 2, **characterised by** separating magnesium sulphate from the solution acquired after the precipitation of iron.

4. A method according to claim 3, **characterised by** conveying the separated magnesium sulphate to thermal decomposition, in which sulphur dioxide is formed, and by conveying the formed sulphur dioxide to the manufacture of sulphuric acid.

5. A method according to claim 4, **characterised by** forming magnesium oxide in the thermal decomposition and by using the formed magnesium oxide in the process as a neutralising agent in the precipitation of metals.

6. A method according to claim 1, **characterised by** recovering from the solution acquired from the first step nickel and cobalt by precipitating, after which separating iron and magnesium together from the remaining solution as sulphates.

7. A method according to claim 6, **characterised by** conveying the iron and magnesium sulphates to thermal decomposing the conditions of which are adjusted such that magnesium remains in the sulphate form, but iron sulphate decomposes to hematite, and by creating sulphur dioxide in the decomposition and conveying it to the manufacture of sulphuric acid.

8. A method according to claims 4 and 7, **characterised by** using the manufactured sulphuric acid as the sulphuric acid fed to the second process step.

9. A method according to any one of claims 1-8, **characterised by** conveying the solid phase acquired from the second process step to water leaching to separate water-soluble sulphates, conveying the solution separated from solids to the first process step and removing the remaining solid phase from the process.

10. A method according to claim 6, **characterised by** the laterite being limonitic laterite having a low magnesium content.

11. A method according to claim 7, **characterised by** using the formed hematite as an iron concentrate.

12. A method according to any one of claims 1-11, **characterised in that** the temperature in the second step is 150-270°C.

## Patentansprüche

1. Verfahren zur Rückgewinnung von Nickel und Kobalt aus Laterit, welches Verfahren erstens einen Prozess in zwei Schritten enthält, in dem Schwefelsäure und Schwefeldioxid als Reagenzien verwendet werden, **gekennzeichnet durch**
- Zuführen von Laterit, von einer flüssigen Phase, die aus dem zweiten Prozessschritt erhalten worden ist, und von Schwefeldioxid zu dem ersten Prozessschritt,
- Zuführen von einer rückständigen festen Phase, die aus dem ersten Schritt erhalten worden ist, und von einer erwärmten, konzentrierten Schwefelsäure mit der Konzentration über 90 % zu dem zweiten Prozessschritt, und
- Rückgewinnen von Nickel und Kobalt aus einer Lösung, die aus dem ersten Schritt erhalten worden ist,
wobei die Menge an Schwefeldioxid, die in den Prozess eingeführt wird, derart dimensioniert ist, dass Schwefeldioxid alles dreiwertige Eisen sowie Kobalt und Mangan, die als vierwertig angenommen werden, zu bivalenten Verbindungen reduziert, und wobei der erste und zweite Prozessschritt bei Atmosphärendruck verarbeitet werden.

2. Verfahren nach Anspruch 1, **gekennzeichnet durch** Rückgewinnen von Nickel und Kobalt durch Ausfällen aus der Lösung, die aus dem ersten Schritt erhalten worden ist, danach Ausfällen von Eisen aus der verbleibenden Restlösung.

3. Verfahren nach Anspruch 2, **gekennzeichnet durch** Trennen von Magnesiumsulfat aus der Lösung, die nach dem Ausfällen von Eisen erhalten worden ist.

4. Verfahren nach Anspruch 3, **gekennzeichnet durch** Fördern des abgetrennten Magnesiumsulfats zu einer thermischen Zerlegung, in der Schwefeldioxid gebildet wird, und durch Fördern des gebildeten Schwefeldioxids zu der Herstellung von Schwefelsäure.

5. Verfahren nach Anspruch 4, **gekennzeichnet durch** Bilden von Magnesiumoxid in der thermischen Zerlegung, und durch Verwenden des gebildeten Magnesiumoxids in dem Prozess als ein Neutralisierungsmittel in der Ausfällung von Metallen.

6. Verfahren nach Anspruch 1, **gekennzeichnet durch** Rückgewinnen von Nickel und Kobalt durch Ausfällen aus der Lösung, die aus dem ersten Schritt erhalten worden ist, danach Trennen von Eisen und Magnesium zusammen aus der verbleibenden Restlösung als Sulfate.

7. Verfahren nach Anspruch 6, **gekennzeichnet durch** Fördern der Eisen- und Magnesiumsulfate zum thermischen Zerlegen, dessen Bedingungen derart angepasst sind, dass Magnesium in der Sulfatform verbleibt, aber Eisensulfat zu Hämatit zerfällt, und durch Erzeugen von Schwefeldioxid in der Zerlegung und durch Fördern von diesem zu der Herstellung von Schwefelsäure.

8. Verfahren nach Ansprüchen 4 und 7, **gekennzeichnet durch** Verwenden der hergestellten Schwefelsäure als die Schwefelsäure, die dem zweiten Prozessschritt zugeführt wird.

9. Verfahren nach einem der Ansprüche 1 bis 8, **gekennzeichnet durch** Fördern der festen Phase, die aus dem zweiten Schritt erhalten worden ist, zum Wasserauslaugen, um wasserlösliche Sulfate zu trennen, durch Fördern der Lösung, die aus den Feststoffen getrennt worden ist, zu dem ersten Prozessschritt und durch Entfernen der verbleibenden restlichen festen Phase aus dem Prozess.

10. Verfahren nach Anspruch 6, **gekennzeichnet durch** den Laterit, der ein Limonitlaterit mit einem niedrigen Magnesiumgehalt ist.

11. Verfahren nach Anspruch 7, **gekennzeichnet durch** Verwenden des gebildeten Hämatits als ein Eisenkonzentrat.

12. Verfahren nach einem der Ansprüche 1 bis 11, **dadurch gekennzeichnet, dass** die Temperatur in dem zweiten Schritt 150-270 °C beträgt.

## Revendications

1. Procédé de récupération de nickel et de cobalt à partir de latérite, lequel le procédé comprend un premier procédé en deux étapes dans lequel de l'acide sulfurique et du dioxyde de soufre sont utilisés comme réactifs, **caractérisé par**
- l'alimentation au niveau de la première étape du processus de latérite, d'une phase liquide obtenue à partir de la deuxième étape du processus et de dioxyde de soufre,
- l'alimentation au niveau de la deuxième étape du processus d'un solide résiduel obtenue à partir de la première étape, et le chauffage d'acide sulfurique concentré de concentration supérieure à 90 % et
- la récupération de nickel et de cobalt à partir d'une solution obtenue à partir de la première étape
dans lequel la quantité de dioxyde de soufre alimenté dans le processus est dimensionnée de telle sorte que le dioxyde de soufre réduit tout le fer trivalent et le cobalt et le manganèse supposés quadrivalents à bivalents et dans lequel lesdites premières et deuxième étape du processus sont effectuées à la pression atmosphérique.

2. Procédé selon la revendication 1, **caractérisé par** la récupération à partir de la solution obtenue lors de la première étape de nickel et de cobalt par précipitation, après quoi la précipitation de fer à partir de la solution restante.

3. Procédé selon la revendication 2, **caractérisé par** la séparation du sulfate de magnésium à partir de la solution obtenue après la précipitation de fer.

4. Procédé selon la revendication 3, **caractérisé par** le convoyage du sulfate de magnésium séparé vers une décomposition thermique, dans laquelle du dioxyde de soufre est formé, et par le convoyage du dioxyde de soufre formé vers l'usine d'acide sulfurique.

5. Procédé selon la revendication 4, **caractérisé par** la formation d'oxyde de magnésium dans la décomposition thermique et par l'utilisation de l'oxyde de magnésium formé dans le processus comme agent de neutralisation dans la précipitation de métaux.

6. Procédé selon la revendication 1, **caractérisé par** la récupération à partir de la solution obtenue à partir de la première étape de nickel et de cobalt par précipitation, après quoi la séparation du fer et du magnésium ensemble à partir de la solution restante sous la forme de sulfates.

7. Procédé selon la revendication 6, **caractérisé par** le convoyage des sulfates de fer et de magnésium vers une décomposition thermique, les conditions de laquelle sont ajustées de telle sorte que le magnésium demeure sous la forme de sulfate, mais le sulfate de fer se décompose en hématite, et par la création de dioxyde de sulfure dans la décomposition et son convoyage vers l'usine on d'acide sulfurique.

8. Procédé selon les revendications 4 et 7, **caractérisé par** l'utilisation de l'acide sulfurique fabriqué sous la forme d'acide sulfurique alimenté au niveau de la deuxième étape du processus.

9. Procédé selon l'une quelconque des revendications 1 à 8, **caractérisé par** le convoyage de la phase solide obtenue à partir lors de la deuxième étape du processus vers la lixiviation à l'eau pour séparer des sulfates solubles dans l'eau, par le convoyage de la solution séparée à partir des matières solides vers la première étape du processus et par l'élimination de la phase solide restante du processus.

10. Procédé selon la revendication 6, **caractérisé par** la latérite étant de la latérite limonitique possédant une faible teneur en magnésium.

11. Procédé selon la revendication 7, **caractérisé par** l'utilisation de l'hématite formée comme un concentré de fer.

12. Procédé selon l'une quelconque des revendications 1 à 11, **caractérisé en ce que** la température dans la deuxième étape est comprise entre 150 et 270 °C.
